# EUROPEAN PATENT APPLICATION

(11) **EP 2 133 817 A1**
(43) Date of publication of application: **16.12.2009**
(21) Application number: 09003846.4
(22) Date of filing: 17.03.2009
(51) Int. Cl.: G06K 7/14

(54) **Recognition apparatus and recognition method**

(30) Priority: 10.06.2008 JP 2008151828
(71) Applicant: Kabushiki Kaisha Toshiba, Minato-ku, Tokyo 105-8001 (JP)
(72) Inventor: Akagi, Takuma, Tokyo 105-8001 (JP); Ariyoshi, Shunji, Tokyo 105-8001 (JP); Nihommatsu, Morio, Tokyo 105-8001 (JP); Nishizono, Makoto, Tokyo 105-8001 (JP)
(74) Representative: Kramer - Barske - Schmidtchen

(57) **Abstract**

A barcode recognition apparatus (1) includes an image interface (11), an image analysis unit (12), an image conversion unit (13), and a bar recognition unit (14). The image interface (11) acquires an image including a barcode captured by a camera (2). The image analysis unit (12) analyzes a characteristic of an input image acquired from the camera (2), and decides an image conversion method for the conversion from the input image into an image for recognition processing on the basis of the analysis result. The image conversion unit (13) converts the input image into an image for recognition processing by the image conversion method decided by the image analysis unit (12). The bar recognition unit (14) performs barcode recognition processing for the image for recognition processing obtained by the image conversion unit (13).

## Description

The present invention relates to a recognition apparatus which recognizes information such as a character, a symbol, or a barcode as a detection target which is attached to a medium such as a sheet, a document, or an article, and a recognition method or the like which is applied to the recognition apparatus or the like.

Some systems which process sheets, documents, articles, and the like use barcode recognition processing or character recognition processing (OCR). Some sort systems designed to perform sort processing for sort targets such as sheets, documents, or articles perform sort processing by recognizing characters, symbols, or barcodes representing sort information printed on sort targets. For sort systems which sort postal matter, the following operation mode has been put into practice. In this mode, address information indicated by characters or symbols is recognized by character recognition processing, the address information obtained as a recognition result is converted into a barcode, and the barcode is printed on postal matter. That is, the above sort system is equipped with a character recognition apparatus which recognizes characters, symbols, or the like, or a barcode recognition apparatus for recognizing barcodes.

For example, the above barcode recognition apparatus performs the recognition processing (barcode recognition processing) of recognizing a barcode from an image including a barcode-printed area captured by a camera. The above character recognition apparatus performs the recognition processing (character recognition processing) of recognizing a character or a symbol from an image including a character- or symbol-written area captured by a camera. A recognition program for performing recognition processing for such a detection target is generally designed to process an image with a predetermined number of tone levels. Further, recently, the image capturing performance of cameras for capturing images of a character- or symbol-written area or a barcode-printed surface has risen. For example, such performance means that more images can be captured with larger amounts of information, such as the number of tone levels.

Under such circumstances, when a camera designed to capture an image as a recognition processing target is to be replaced by a camera designed to capture a high tone image, it is a challenge to provide an efficient means of cooperation between high tone images captured by the camera and an existing recognition program for processing low tone images. For example, the existing recognition program could be changed into a program for processing high tone images captured by a camera. In this case, it takes much labor to revise the recognition program. In addition, after the program is revised, recognition processing itself tends to slow down, because the processing targets are images with large amounts of information. It is also conceivable to convert a high tone image captured by the camera into a low tone image complying with the recognition program by a predetermined conversion scheme before the execution of recognition processing. In this case, in spite of the improvement in the performance of the camera, no improvement in the accuracy of recognition processing can be expected.

According to an aspect of the present invention, it is an object to provide a target recognition apparatus and target recognition method which can execute recognition processing for a detection target with high efficiency and accuracy.

A recognition apparatus according to an aspect of the present invention, comprising an image acquisition unit which acquires an input image including a detection target image; an image analysis unit which analyzes the input image acquired by the image acquisition unit and decides an image conversion method for conversion from the input image into an image in a form for recognition processing on the basis of the analysis result; an image conversion unit which converts the input image acquired by the image acquisition unit into an image for recognition processing by the image conversion method decided by the image analysis unit; and a detection target recognition unit which performs detection target recognition processing for the image for recognition processing obtained by the image conversion unit.

A recognition apparatus according to an aspect of the present invention, comprising an image acquisition unit which acquires an input image including a detection target image, a first image conversion unit which converts the input image acquired by the image acquisition unit into an image in a form for recognition processing, a first detection target recognition unit which performs detection target recognition processing for the image for recognition processing obtained by the first image conversion unit, an image analysis unit which analyzes the input image on the basis of information obtained in the process of detection target recognition processing in the first detection target recognition unit, when detection target recognition by the first detection target recognition unit has failed, and decides an image conversion method for re-conversion of the input image into an image for recognition processing on the basis of the analysis result, a second image conversion unit which reconverts the input image into an image for recognition processing on the basis of the analysis result obtained by the image analysis unit, and a second detection target recognition unit which performs detection target recognition processing for the image for recognition processing obtained by the second image conversion unit.

A recognition method according to an aspect of the present invention, comprising acquiring an input image including a detection target image, performing image analysis on the acquired input image, deciding an image conversion method for conversion of the input image into an image in a form for recognition processing on the basis of the analysis result on the input image, converting the input image into an image for recognition processing by the decided image conversion method, and performing detection target recognition processing for the image for recognition processing obtained by the conversion.

A recognition method according to an aspect of the present invention, comprising acquiring an input image including a detection target image, converting the input image into an image in a form for recognition processing by a first image conversion method, performing detection target recognition processing for the image for recognition processing obtained by the first image conversion method, analyzing the input image on the basis of information obtained in the process of the detection target recognition processing when recognition of the detection target has failed, deciding a second image conversion method for re-conversion from the input image into an image for recognition processing on the basis of the analysis result on the input image, reconverting the input image into an image for recognition processing by the second image conversion method, and re-executing detection target recognition processing for the image for recognition processing obtained by the re-conversion.

The invention can be more fully understood from the following detailed description when taken in conjunction with the accompanying drawings, in which:
FIG. 1 is a block diagram showing an example of the arrangement of a barcode recognition apparatus;
FIG. 2 is a block diagram showing an example of the schematic arrangement of a sort system to which the barcode recognition apparatus is applied;
FIG. 3 is a view showing an example of an image captured by a camera;
FIG. 4 is a graph for explaining an example of an image conversion process;
FIG. 5 is a graph showing the characteristics of the first to fifth image conversion processes (conversion tables);
FIGS. 6A to 6E are views showing examples of images obtained by the first to fifth image conversion processes;
FIG. 7 is a flowchart for explaining a sequence of the first process example in the barcode recognition apparatus;
FIG. 8 is a graph showing an example of a density histogram for all the pixels of an input image with 4,096 tone levels;
FIG. 9 is a graph for explaining the medium density value determined by a percentile scheme;
FIG. 10 is a graph for explaining an example of a conversion table corresponding to a medium density value;
FIG. 11 is a flowchart for explaining a sequence of the second process example in the barcode recognition apparatus;
FIG. 12 is a graph for explaining the bar density value determined by the percentile scheme;
FIG. 13 is a graph for explaining an example of the conversion table corresponding to a bar density value;
FIG. 14 is a flowchart for explaining a sequence of the third process example in the barcode recognition apparatus;
FIG. 15 is a flowchart for explaining a sequence of the fourth process example in the barcode recognition apparatus;
FIG. 16 is a graph for explaining an example of a conversion table with reference to a separation threshold; and
FIG. 17 is a flowchart for explaining a sequence of the fifth process example in the barcode recognition apparatus.

An embodiment of the present invention will be described below with reference to the views of the accompanying drawing.

This embodiment will exemplify a recognition apparatus and recognition method which recognize information such as a barcode, character, or symbol from an input image (image information included in it). In the following embodiment, a barcode recognition apparatus and a barcode recognition method will be described as examples of the recognition apparatus and the recognition method. Note that the barcode recognition apparatus and barcode recognition method to be described below can also be applied to a character recognition apparatus and a character recognition method as other examples of the target recognition apparatus and target recognition method.

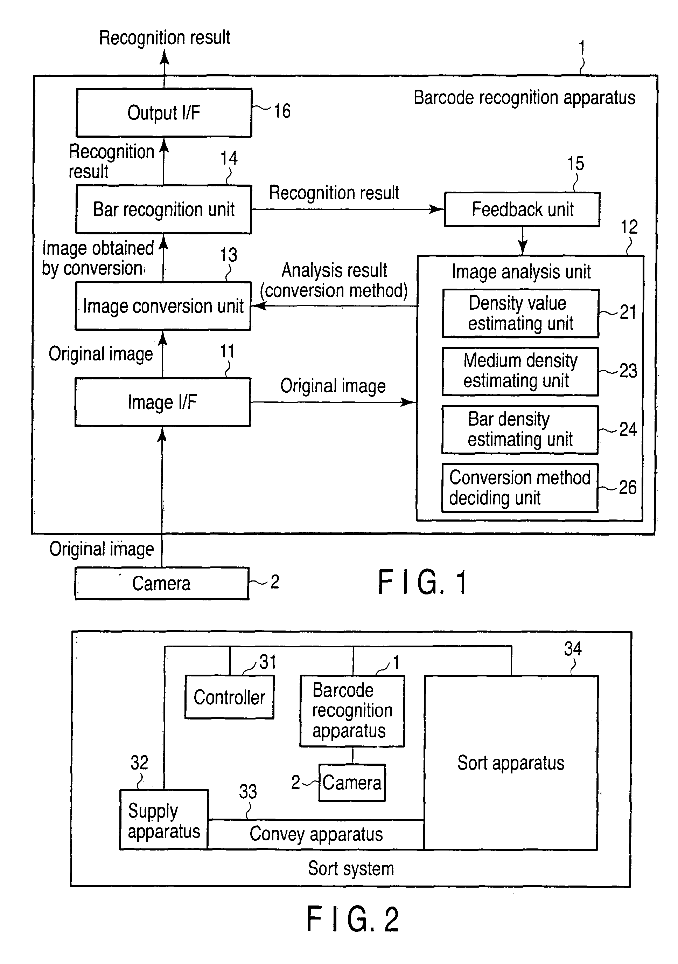

FIG. 1 is a block diagram showing an example of the arrangement of a barcode recognition apparatus 1 according to an embodiment of the present invention.

Assume that, for example, the barcode recognition apparatus 1 recognizes a barcode printed in fluorescent ink on the print surface of a sheet as a medium.

In the case shown in FIG. 1, the barcode recognition apparatus 1 includes an image interface 11, an image analysis unit 12, an image conversion unit 13, a bar recognition unit (detection target recognition unit) 14, a feedback unit 15, and an output interface 16.

The barcode recognition apparatus 1 is an example of the target recognition apparatus. The barcode recognition apparatus 1 as the above target recognition apparatus is implemented by a computer having a function of performing information processing by using various types of programs. The computer serving as the barcode recognition apparatus 1 includes an interface for image input which corresponds to the image interface 11, an interface for outputting recognition results which corresponds to the output interface 16, and a control unit for executing various types of processing. The control unit of the computer as the barcode recognition apparatus 1 includes a CPU, a RAM, a ROM, and a rewritable nonvolatile memory. Such a control unit implements various types of processing by executing various types of programs stored in the ROM or the nonvolatile memory using the above CPU or RAM as a work memory.

For example, the control unit of the computer as the barcode recognition apparatus 1 functions as the image analysis unit 12 by executing an image analysis program. The control unit of the computer as the barcode recognition apparatus 1 functions as the image conversion unit 13 by executing an image conversion program. The control unit of the computer as the barcode recognition apparatus 1 functions as the bar recognition unit 14 by executing a barcode recognition processing program. The control unit of the computer as the barcode recognition apparatus 1 functions as the feedback unit 15 by executing a feedback processing program. Note that the image analysis unit 12, the image conversion unit 13, the bar recognition unit 14, and the feedback unit 15 can also be implemented by hardware such as integrated circuits.

The camera 2 is connected to the barcode recognition apparatus 1. The camera 2 reads an image on the surface of a sheet on which a barcode is printed. For recognizing a barcode printed in fluorescent ink on a sheet, the camera 2 includes a fluorescent scanner and an illumination unit. In this case, the illumination unit applies light for exciting the phosphor contained in fluorescent ink onto the surface of a sheet on which a barcode is printed. For example, the illumination unit is a fluorescent lamp or an LED. The above fluorescent scanner receives fluorescence emitted from the barcode-printed surface of the sheet on which the light from the illumination unit is applied. That is, the fluorescent scanner acquires the barcode printed in fluorescent ink on the surface of the sheet as image information (fluorescent image). The fluorescent image read by the fluorescent scanner is supplied to the image interface (image acquisition unit) 11 of the barcode recognition apparatus 1.

Assume that the camera 2 captures an image with a larger amount of information than an image to be processed by the bar recognition unit 14 in the barcode recognition apparatus 1. For example, the camera 2 captures an image with a high tone level (e.g., a 12-bit image or 16-bit image) as compared with the tone level of an image to be processed by the bar recognition unit 14 (e.g., an 8-bit image). Assume that in the following description, images (input images) captured by the camera 2 are mainly 12-bit images with 4,096 tone levels, and images (images for recognition processing) to be processed by the bar recognition unit 14 are mainly 8-bit images with 256 tone levels.

Note that the image analysis unit 12 or the image conversion unit 13 may be provided in the camera 2. In this case, it suffices to supply an image (8-bit image) obtained by image conversion by the above camera to the bar recognition unit of the barcode recognition apparatus 1 via an image interface. In such a form, the control unit in the camera 2 can implement a function similar to the image analysis unit 12 by executing an image analysis program, and can implement a function similar to the image conversion unit 13 by executing an image conversion program.

The image interface 11 functions as an image acquisition unit which acquires an image as a recognition target (to be simply referred to as an input image hereinafter) including an image of a barcode as a detection target. That is, the image interface 11 is an interface for inputting the image captured by the camera 2. The input image acquired from the camera 2 by the image interface 11 is supplied to the image analysis unit 12 and the image conversion unit 13.

The image analysis unit 12 analyzes the image (input image) captured by the camera 2, which is acquired by the image interface 11, and determines an image conversion method. That is, the image analysis unit 12 performs the processing of determining (estimating) a characteristic of an input image and the processing of deciding an image conversion method of converting the input image into an image for recognition processing. The image analysis unit 12 also supplies information indicating the conversion method for the conversion of the input image into the image for recognition processing to the image conversion unit 13. Note that the image analysis unit 12 corresponds to the first and second image analysis units.

In the case shown in FIG. 1, the image analysis unit 12 includes a density value estimating unit 21, a medium density estimating unit 23, a bar density estimating unit 24, and a conversion method deciding unit 26.

The density value estimating unit 21, the bar density estimating unit 24, and the medium density estimating unit 23 respectively perform processes for determining (estimating) a characteristic of an input image. For example, the density value estimating unit 21 determines the modal density value or average density value of an input image, the density value based on the percentile scheme, or the like as a characteristic of the input image. The bar density estimating unit 24 determines the density value of a detection element as a detection element image in an input image. That is, the bar density estimating unit 24 determines, as the characteristic of the input image, the density value of a bar image as a detection element image forming a barcode as a detection target in the input image. The medium density estimating unit 23 determines the density value of a medium as a background image in an input image.

Note that the density value estimating unit 21, the bar density estimating unit 24, and the medium density estimating unit 23 determine information for deciding an image conversion method. It therefore suffices to selectively provide one of the density value estimating unit 21, the bar density estimating unit 24, and the medium density estimating unit 23. When, for example, an image conversion method is to be decided on the basis of a characteristic (e.g., a modal density value, an average density value, or a density value based on the percentile scheme) obtained from an entire input image, the image analysis unit 12 may be provided with the density value estimating unit 21. When an image conversion method is to be decided on the basis of a combination of the density value of each bar and the density value of a medium in an input image, the image analysis unit 12 may be provided with the bar density estimating unit 24 and the medium density estimating unit 23.

The conversion method deciding unit 26 decides an image conversion method for the conversion of an input image into an image for recognition processing. That is, the conversion method deciding unit 26 decides an image conversion method for the conversion of an input image into an image for recognition processing on the basis of an analysis result on a characteristic of the input image which is obtained by the density value estimating unit 21, a bar density estimating unit 41, or a medium density estimating unit 42. If, for example, an image for recognition processing which is to be processed by the bar recognition unit 14 is an 8-bit image, and an input image captured by the camera 2 is a 12-bit image, the conversion method deciding unit 26 decides an image conversion method for the conversion of a 12-bit input image into an 8-bit image on the basis of a characteristic of the input image. Information indicating the image conversion method decided by the conversion method deciding unit 26 is supplied to the image conversion unit 13.

The image conversion unit 13 converts the input image received by the image interface 11 into an image for recognition processing which is to be processed by the bar recognition unit 14. The image conversion unit 13 has a function of performing an image conversion process by using various types of conversion methods. The image conversion unit 13 converts an input image into an image for recognition processing by the image conversion method decided by the image analysis unit 12. The image conversion process performed by the image conversion unit 13 will be described in detail later.

The bar recognition unit 14 functions as a detection target recognition unit and performs recognition processing for a barcode as a detection target. The bar recognition unit 14 performs the processing of recognizing the barcode included in an image for recognition processing (image after conversion) supplied from the image conversion unit 13. The bar recognition unit 14 includes, for example, a bar detection unit, a decoding unit, and a determination unit. The bar recognition unit 14 corresponds to the first and second bar recognition units.

The bar detection unit functions as a detection unit for a detection target, and performs the processing of detecting each bar constituting a barcode as a detection target. The bar detection unit detects each bar constituting a barcode as a bar candidate from an image for recognition processing supplied from the image conversion unit 13. The bar detection unit discriminates the type of each detected bar. The bar detection unit discriminates the type of each bar in accordance with the specifications of the barcode on the basis of the length of each bar, the relative position of each bar in the entire barcode, and the like. The bar detection unit also has a function of detecting an entire barcode area as a barcode area candidate on the basis of the position of each detected bar candidate and the like.

For example, the bar detection unit detects and recognizes each bar by the following sequence.

Upon reception of an 8-bit image from the image conversion unit 13, the bar detection unit extracts pixels having density values exceeding a predetermined threshold from the 8-bit image.

Upon extracting pixels having density values exceeding the predetermined threshold, the bar detection unit selects an area where extracted pixels aggregate as a bar candidate.

Upon selecting a bar candidate, the bar detection unit extracts, as a barcode area, a portion where the respective bar candidates are arranged side by side in the horizontal direction (a direction perpendicular to the long side direction of each bar candidate).

Upon extracting a barcode area, the bar detection unit determines (estimates) the center position of the barcode area in the longitudinal direction of each bar candidate (the long side direction of each bar candidate).

Upon determining the center position in the longitudinal direction, the bar detection unit encodes each bar candidate. That is, the bar detection unit determines the type of each bar candidate with reference to the above center position, and encodes the determination result. If, for example, a barcode as a recognition target is constituted by four types of bars, namely an ascender bar, a descender bar, a long bar, and a timing bar, the bar detection unit determines the type of each bar candidate. That is, the bar detection unit determines, as an ascender bar, a bar candidate having a bar formed above the center position. The bar detection unit determines, as a descender bar, a bar candidate having a bar formed below the center position. The bar detection unit determines, as a long bar, a bar candidate having a bar which is longer in the vertical direction with referent to the center. The bar detection unit determines, as a timing bar, a bar candidate having a short bar with reference to the center.

Upon determining the type of each bar candidate, the bar detection unit encodes the determination result on each bar candidate. The bar detection unit supplies, to the decoding unit, information obtained as a barcode detection result by arranging the encoded determination results on the respective bar candidates in the arrangement order of the respective bar candidates.

The decoding unit decodes the barcode detected by the bar detection unit. The decoding unit decodes the barcode on the basis of information indicating the type of each bar as a detection result on the barcode obtained by the bar detection unit and information indicating the arrangement of the respective bars. The decoding unit may have a function of correcting an error on the basis of an error correction code, to be described later. In this case, the decoding unit decodes the information indicated by the barcode on the basis of the detection result obtained by the bar detection unit, and corrects the decoded information by error correction processing based on the error correction code.

The determination unit determines whether the decoding result (barcode recognition result) on the barcode obtained by the decoding unit is valid. For example, the determination unit determines the validity of the recognition result on the barcode depending on whether the recognition result is information constituted by a predetermined number of digits. The determination unit can compare the dictionary data stored in a dictionary database (not shown) with a recognition result on a barcode and determine that the recognition result existing as dictionary data is valid. Upon determining that the decoding result on the barcode is valid, the determination unit outputs the decoding result obtained by the decoding unit to the output interface 16 as a recognition result on the barcode. Upon determining that the decoding result on the barcode is not valid, the determination unit supplies the decoding result obtained by the decoding unit, the bar detection result by the bar detection unit, or the like to the feedback unit 15.

Note that when the barcode recognition apparatus 1 as a target recognition apparatus is applied to a character recognition apparatus, the bar recognition unit 14 corresponds to a character recognition unit which recognizes characters or symbols by a predetermined recognition program. In this case, the bar detection unit and the decoding unit can be regarded to correspond to a processing unit which recognizes each character candidate by detecting a character candidate, and the determination unit can be regarded to correspond to a processing unit which determines whether a character recognition result is valid.

The feedback unit 15 feeds back the information obtained by recognition processing by the bar recognition unit 14 to the image analysis unit 12. Assume that the feedback unit 15 feeds back information, of the information obtained by recognition processing by the bar recognition unit 14, which can be used for image analysis to the image analysis unit 12. For example, the feedback unit 15 calculates a separation threshold for the density of a bar and the density of a background on the basis of the information of a bar candidate which is obtained by the bar detection unit of the bar recognition unit 14, and feeds back the calculated separation threshold to the image analysis unit 12. In this case, the image analysis unit 12 re-performs the processing of analyzing an image on the basis of the information supplied from the feedback unit 15. This processing will be described in detail below.

The output interface 16 is an interface for outputting the barcode recognition result obtained by the bar recognition unit 14 to the outside. If, for example, the determination unit of the bar recognition unit 14 determines that a barcode decoding result is valid, the output interface 16 outputs the decoding result obtained by the decoding unit as a barcode recognition result to the outside. Assume that the determination unit of the bar recognition unit 14 determines that the decoding result is not valid. In this case, if the feedback unit 15 does not perform feedback processing, the output interface 16 outputs information indicating that the barcode recognition has failed.

FIG. 2 is a block diagram showing the schematic arrangement of a sort system to which the barcode recognition apparatus 1 is applied.

The sort system shown in FIG. 2 is a system which performs sort processing for articles (e.g., sheets) on the basis of the barcodes printed on the articles. The following description is based on the assumption that articles to be subjected to sort processing are sheets on each of which information (sort information) indicating a sort destination is printed in fluorescent ink in the form of a barcode on the first surface.

The sort system shown in FIG. 2 includes a controller 31, a supply apparatus 32, a conveyor apparatus 33, a sort apparatus 34, the camera 2, and the barcode recognition apparatus 1. In the arrangement example shown in FIG. 2, the supply apparatus 32, the conveyor apparatus 33, the sort apparatus 34, the barcode recognition apparatus 1, and the like are connected to the controller 31.

The controller 31 performs overall control of the sort system. The controller 31 is formed by a computer including, for example, a CPU, various types of memories, and various types of interfaces. The controller 31 has a function of executing various types of processing by making the CPU execute programs stored in the memory. For example, the controller 31 is connected to the respective units via various types of interfaces and performs operation control and the like of the respective units on the basis of control programs stored in the memory. In addition, an operation panel (not shown) and the like which displays guides to the operator and input operation instructions from the operator are connected to the controller 31.

Sheets to be sorted are set in the supply apparatus 32 so as to be aligned in a predetermined direction. The supply apparatus 32 picks up the set sheets one by one and supplies them to the conveyor path to the conveyor apparatus 33. The conveyor apparatus 33 conveys each sheet by controlling the controller 31. For example, the conveyor apparatus 33 conveys each sheet sequentially picked up by the supply apparatus 32 at a predetermined conveying speed.

The camera 2 captures an image on the first surface of a sheet conveyed by the conveyor apparatus 33. As described above, the camera 2 includes an illumination unit and a fluorescent scanner, and captures an image including the barcode printed in fluorescent ink on the first surface of a sheet. With the above arrangement, the barcode recognition apparatus 1 performs recognition processing for a barcode of the image captured by the camera 2. The barcode recognition result obtained by the barcode recognition apparatus 1 is supplied to the controller 31. The controller 31 performs the processing of sorting sheets under the control of the conveyor apparatus 33 and sort apparatus 34 on the basis of the barcode recognition result obtained by the barcode recognition apparatus 1.

The sort apparatus 34 has a plurality of sort pockets in which sheets are sorted and collected. For example, the sort apparatus 34 includes a plurality of sort pockets partitioned into a plurality of rows and columns, a plurality of gate mechanisms, and branched conveyor paths. In this case, the sort apparatus 34 conveys the respective sheets to desired sort pockets and collects them in the sort pockets by controlling the respective gate mechanisms and the like in accordance with control signals from the controller 31.

The images captured by the camera 2 will be described next.

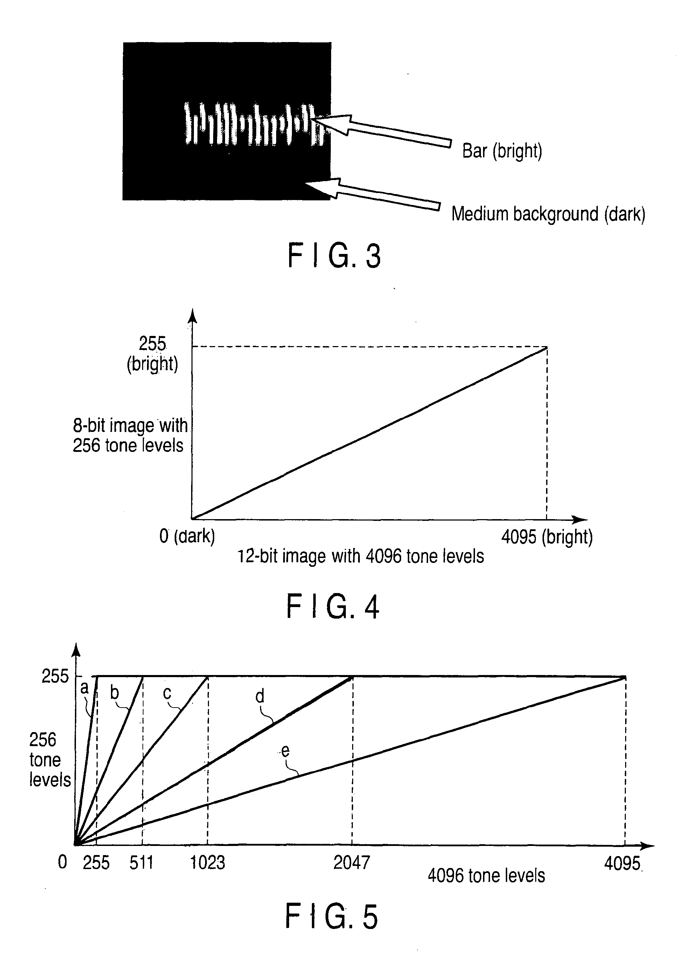

This embodiment is based on the assumption that barcodes printed in fluorescent ink are recognized. The image captured by the fluorescent scanner as the camera 2 is assumed to be an image in which the bar portion is bright and the background is dark. For example, FIG. 3 is a view showing an example of the image captured by the camera 2. In the image shown in FIG. 3, the bar is bright, and the background (medium) is dark. As shown in FIG. 3, it is possible to reliably extract a bar from an image in which the bar can be easily discriminated from the background, and hence the barcode recognition accuracy is high. In contrast to this, if both a bar and a background are bright or dark, it is difficult to detect the bar, resulting in a decrease in the barcode recognition accuracy.

In the barcode recognition apparatus 1 described above, the image analysis unit 12 analyzes a characteristic of an image (input image) captured by the camera 2, and the image conversion unit 13 converts the input image which increases the barcode recognition accuracy (e.g., an image from which a bar can be easily detected) on the basis of the analysis result. In this case, it is assumed that the camera 2 captures a 12-bit image, and the bar recognition unit performs barcode recognition processing for an 8-bit image. That is, this embodiment is based on the assumption that a 12-bit input image is converted into an 8-bit image for recognition on the basis of a characteristic of the input image.

The image conversion process carried out in the image conversion unit 13 will be described next.

FIG. 4 is a graph for explaining an example of an image conversion process. In the example shown in FIG. 4, a 12-bit image with the density value (luminance value) of each pixel being represented by 0 to 4,095 (an image with 4,096 tone levels) is converted into an 8-bit image with the density value (luminance value) of each pixel being represented by 0 to 255 (an image with 256 tone levels). Referring to FIG. 4, larger numerical values represent brighter images, and vice versa. Assume that in this embodiment, as shown in FIG. 4, the larger a density value, the brighter a pixel.

In image conversion like that shown in FIG. 4, an image in a 12-bit range can be converted into an image in an 8-bit range without any irregularity. In image conversion like that shown in FIG. 4, however, an improvement in the barcode recognition accuracy, such as the barcode detection accuracy, cannot be expected. That is, if the difference in density value between each pixel constituting a bar in a 12-bit image and each pixel constituting a background is small (i.e., both the bar and the background are bright or dark), it may be difficult to discriminate a bar from a background in an 8-bit image obtained by image conversion like that shown in FIG. 4. This is because if the density difference between a background and a bar in a 12-bit image is small, the density difference can be further reduced or eliminated when the 12-bit image is converted into an 8-bit image.

The first to fifth process examples will be described below as process examples for conversion of images (to be also referred to as input images) captured by the camera 2 into images for recognition processing.

The first process example will be described first.

Assume that in the first process example, an image conversion method is decided on the basis of a characteristic (a density value distribution) of an entire 12-bit image with 4,096 tone levels. Assume also that in the first process example, the image conversion unit 13 has five types of image conversion processes (first to fifth image conversion processes) as methods of converting a 12-bit image into an 8-bit image. Examples of the first to fifth image conversion processes will be described below.

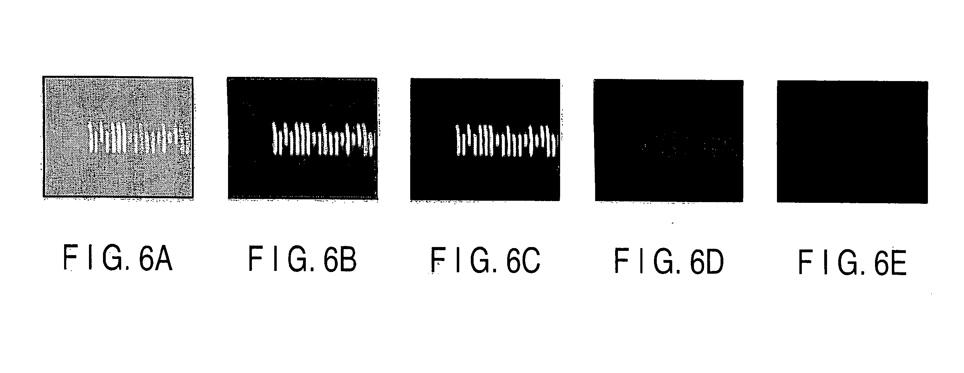

FIG. 5 is a graph showing the characteristics (conversion tables) of the first to fifth image conversion processes. FIGS. 6A to 6E are views showing examples of the images obtained by the first to fifth image conversion processes.
(a) In the first image conversion process, a 12-bit image is linearly converted into an 8-bit image such that pixels with density values of 0 to 255 are converted into pixels with 256 tone levels. In this case, pixels with density values of 256 or more in the 12-bit image are converted into pixels with a density value of 255. The first image conversion process is an image conversion process based on a characteristic a shown in FIG. 5. With the first image conversion process, a bright 8-bit image (an image with 256 tone levels) is obtained, with enhanced changes in the tone levels of the respective pixels with density values of 0 to 255 in the 12-bit image. For example, with the first image conversion process, a bright image like that shown in FIG. 6A is obtained. The first image conversion process can therefore be considered effective for an image conversion process for an input image having many pixels with density values of less than 255 (a dark image as a whole). In particular, the first image conversion process can be considered effective for a case in which the difference in density distribution between pixels constituting a background image in an input image with 4,096 tone levels and pixels constituting a bar image can be enhanced by the range of density values of 0 to 255.
(b) In the second image conversion process, a 12-bit image is linearly converted into an 8-bit image such that pixels with density values of 0 to 511 are converted into pixels with 256 tone levels. In this case, pixels with density values of 512 or more in the 12-bit image are converted into pixels with a density value of 255. The second image conversion process is an image conversion process based on a characteristic b shown in FIG. 5. With the second image conversion process, an 8-bit image (an image with 256 tone levels) is obtained, with enhanced changes in the tone levels of the respective pixels with density values of 0 to 511 in the 12-bit image (the image with 4,096 tone levels). For example, with the second image conversion process, an image like that shown in FIG. 6B is obtained. The second image conversion process can therefore be considered effective for an image conversion process for an input image having many pixels with density values of less than 511. That is, the second image conversion process can be considered effective for a case in which the difference in density distribution between pixels constituting a background image in an input image with 4,096 tone levels and pixels constituting a bar image can be enhanced by the range of density values of 0 to 511.
(c) In the third image conversion process, a 12-bit image is linearly converted into an 8-bit image such that pixels with density values of 0 to 1,023 are converted into pixels with 256 tone levels. In this case, pixels with density values of 1,024 or more in the 12-bit image are converted into pixels with a density value of 255. The third image conversion process is an image conversion process based on a characteristic c shown in FIG. 5. With the third image conversion process, an 8-bit image (an image with 256 tone levels) is obtained, with enhanced changes in the tone levels of the respective pixels with density values of 0 to 1,023 in the 12-bit image (the image with 4,096 tone levels). For example, with the third image conversion process, an image like that shown in FIG. 6C is obtained. The third image conversion process can therefore be considered effective for an image conversion process for an input image having many pixels with density values of less than 1,023. That is, the third image conversion process can be considered effective for a case in which the difference in density distribution between pixels constituting a background image in an input image with 4,096 tone levels and pixels constituting a bar image can be enhanced by the range of density values of 0 to 1,023.
(d) In the fourth image conversion process, a 12-bit image is linearly converted into an 8-bit image such that pixels with density values of 0 to 2,047 are converted into pixels with 256 tone levels. In this case, pixels with density values of 2,048 or more in the 12-bit image are converted into pixels with a density value of 255. The fourth image conversion process is an image conversion process based on a characteristic d shown in FIG. 5. With the fourth image conversion process, an 8-bit image (an image with 256 tone levels) is obtained, with enhanced changes in the tone levels of the respective pixels with density values of 0 to 2,047 in the 12-bit image (the image with 4,096 tone levels). For example, with the fourth image conversion process, an image like that shown in FIG. 6D is obtained. The fourth image conversion process can therefore be considered effective for an image conversion process for an input image having many pixels with density values of less than 2,047. That is, the fourth image conversion process can be considered effective for a case in which the difference in density distribution between pixels constituting a background image in an input image with 4,096 tone levels and pixels constituting a bar image can be enhanced by the range of density values of 0 to 2,047.
(e) In the fifth image conversion process, a 12-bit image is linearly converted into an 8-bit image such that pixels with density values of 0 to 4,095 are converted into pixels with 256 tone levels. In this case, pixels with density values of 4,095 or more in the 12-bit image are converted into pixels with a density value of 255. The fifth image conversion process is an image conversion process based on a characteristic e shown in FIG. 5. With the fifth image conversion process, as shown in FIG. 4, an 8-bit image is obtained without changing any tone level changes of the entire 12-bit image. For example, with the fifth image conversion process, an image like that shown in FIG. 6E is obtained. The fifth image conversion process can therefore be considered effective for an image conversion process for an input image with the density values of the respective pixels being distributed in the wide range of 0 to 4,095, or an input image (a bright image as a whole) having many bright pixels with density values of 2,047 or more.

The first to fifth image conversion processes are executed by a bit shift operation of the density values of the respective pixels. That is, the first to fifth image conversion processes described above are processes which require no complicated arithmetic processing and can obtain an image conversion process result at high speed. For this reason, the image conversion unit 13 can execute the first to fifth image conversion processes at the time an input image is supplied. In this case, the image conversion unit 13 can supply, to the bar recognition unit 14, an image that has undergone an image conversion process by the image conversion method designated at the time when it is designated by the image analysis unit 12.

The image analysis unit 12 analyzes a characteristic of an input image and decides one of the first to fifth image conversion processes on the basis of the analysis result. Assume that in the image analysis unit 12, the density value estimating unit 21 calculates the modal density value of an input image as a characteristic of the input image. The most frequent density value (the modal density value) of the input image is determined as the density value of a background. This is because the background around the area in which a barcode is printed is assumed to have an almost uniform density value. That is, the modal density value is determined as the most frequent density value (the density value of the medium) in the background image.

Deciding an image conversion method on the basis of such a modal density value allows the image analysis unit 12 to decide an image conversion method corresponding to the density value of a background image. That is, if the image conversion unit 13 has the functions of the first to fifth image conversion processes, the conversion method deciding unit 26 selects one of the first to fifth image conversion processes on the basis of the modal density value of the input image which is calculated by the density value estimating unit 21.

As a technique of deciding an image conversion method, for example, there is a method of comparison of a predetermined threshold with the modal density value calculated by the density value estimating unit 21. In this case, a threshold for deciding an image conversion method is appropriately set in accordance with an operation form or the like.

Assume that four thresholds, namely, "100", "200", "500", and "1,000" are set as thresholds for the modal density value of a 12-bit image. In this case, the conversion method deciding unit 26 can decide one of the first to fifth image conversion processes as an image conversion method for an input image on the basis of the following conditions.
(a-1) If a modal density value α is less than "100" (α < 100), the first image conversion process is selected as an image conversion method.
(b-1) If the modal density value α is equal to or more than "100" and less than "200" (100 ≤ α < 100), the second image conversion process is selected as an image conversion method.
(c-1) If the modal density value α is equal to or more than "200" and less than "500" (200 ≤ α < 500), the third image conversion process is selected as an image conversion method.
(d-1) If the modal density value α is equal to or more than "500" and less than "1,000" (500 ≤ α < 1000), the fourth image conversion process is selected as an image conversion method.
(e-1) If the modal density value α is equal to or more than "1,000" (1000 ≤ α), the fifth image conversion process is selected as an image conversion method.

Note that the density value estimating unit 21 may determine the average density value of an input image or the density value determined (estimated) by the percentile scheme instead of the modal density value of an input image like that described above. The average density value is the average value of the density values of all the pixels of the input image. In determination of a density value based on the percentile scheme, it is possible to determine a density value at the time when the value obtained by sequentially integrating density values on the density histogram of an input image in decreasing order of darkness exceeds a predetermined threshold.

The conversion method deciding unit 26 may also select a plurality of image conversion methods. If, for example, α < 100, the conversion method deciding unit 26 may select the first and second image conversion processes. In this case, the image conversion unit 13 supplies the first and second images obtained by the first and second image conversion processes to the bar recognition unit 14. Therefore, the bar recognition unit 14 can perform barcode recognition processing for the first and second images.

A process sequence of the first process example will be described next.

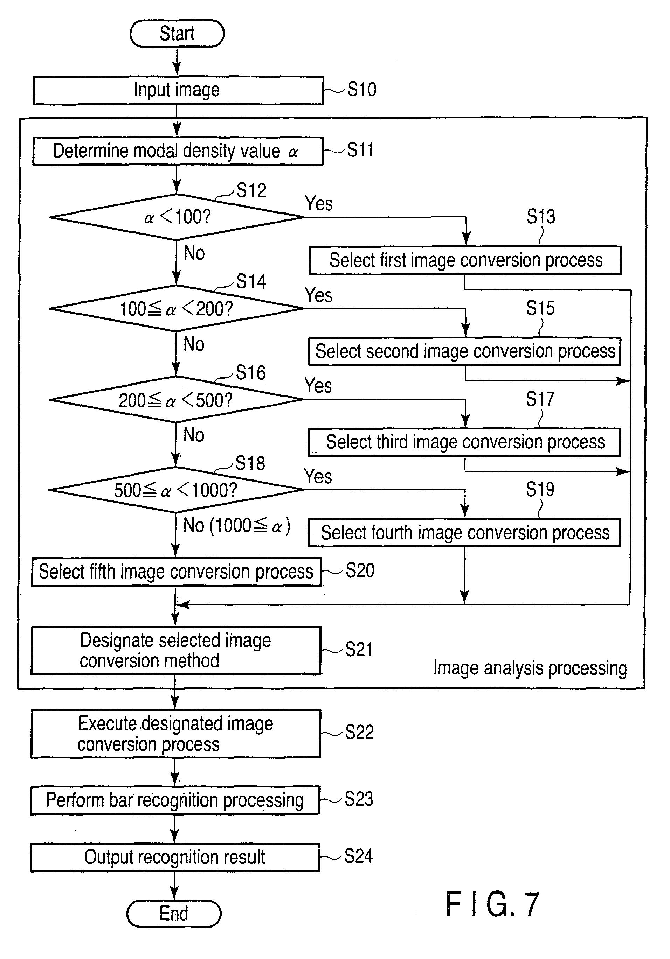

FIG. 7 is a flowchart for explaining the sequence of the first process example in the barcode recognition apparatus 1. The following will be described on the assumption of a form of setting four thresholds ("100", "200", "500", and "1,000") for the modal density value α and selecting one of the first to fifth image conversion processes as an image conversion method on the basis of the thresholds.

First of all, the camera 2 captures, with 12 bits (4,096 tone levels), an image of the barcode-printed surface. The image interface 11 of the barcode recognition apparatus 1 then acquires the 12-bit image captured by the camera 2 (step S10). The image interface 11 supplies the acquired 12-bit image to the image analysis unit 12 and the image conversion unit 13. Upon receiving the 12-bit image from the image interface 11, the image analysis unit 12 determines the modal density value α of the 12-bit image by using the density value estimating unit 21 (step S11).

When the density value estimating unit 21 determines the modal density value α, the conversion method deciding unit 26 selects one of the first to fifth image conversion processes as an image conversion method for the 12-bit image on the basis of the modal density value α and a predetermined threshold (steps S12 to S20).

If, for example, the modal density value α is less than 100 (YES in step S12), the conversion method deciding unit 26 selects the first image conversion process (the process of linearly converting the density values of 0 to 255 of the 4,096 tone levels into the density values of 0 to 255 of 255 tone levels) as an image conversion method for the 12-bit image (step S13). If the modal density value α is equal to or more than 100 and less than 200 (YES in step S14), the conversion method deciding unit 26 selects the second image conversion process (the process of linearly converting the density values of 0 to 511 of 4,096 tone levels into the density values of 0 to 255 of the 255 tone levels) as an image conversion method for the 12-bit image (step S15).

If the modal density value α is equal to or more than 200 and less than 500 (YES in step S16), the conversion method deciding unit 26 selects the third image conversion process (the process of linearly converting the density values of 0 to 1,023 of 4,096 tone levels into the density values of 0 to 255 of 255 tone levels) as an image conversion method for the 12-bit image (step S17). If the modal density value α is equal to or more than 500 and less than 1,000 (YES in step S18), the conversion method deciding unit 26 selects the fourth image conversion process (the process of linearly converting the density values of 0 to 2,047 of 4,096 tone levels into the density values of 0 to 255 of 255 tone levels) as an image conversion method for the 12-bit image (step S19). If the modal density value α is equal to or more than 1,000 (NO in step S18), the conversion method deciding unit 26 selects the fifth image conversion process (the process of linearly converting the density values of 0 to 4,095 of 4,096 tone levels into the density values of 0 to 255 of 255 tone levels) as an image conversion method for the 12-bit image (step S20).

If an image conversion method for the 12-bit image is selected in steps S12 to S20, the conversion method deciding unit 26 designates the selected image conversion process with respect to the image conversion unit 13 (step S21).

When an image conversion method (image conversion process) for the 12-bit image is designated by the conversion method deciding unit 26 of the image analysis unit 12, the image conversion unit 13 converts the 12-bit image into an 8-bit image by the designated image conversion process (step S22). The image conversion unit 13 supplies the 8-bit image generated by the designated image conversion process to the bar recognition unit 14. Note that the image conversion unit 13 can execute each of the first to fifth image conversion processes for the 12-bit image acquired from the image interface 11 concurrently with the processing in the image analysis unit 12. In this case, the image conversion unit 13 supplies the 8-bit image generated by the image conversion method designated by the image analysis unit 12 to the bar recognition unit 14.

The bar recognition unit 14 performs barcode recognition processing for the 8-bit image supplied from the image conversion unit 13 (step S23). In the barcode recognition processing, the bar recognition unit 14 performs, for example, bar candidate detection processing, bar identification processing, barcode decoding processing, and decoding result determination processing, as described above. The bar recognition unit 14 outputs the processing result obtained by barcode recognition processing to the outside via the output interface 16 (step S24).

If, for example, barcode recognition succeeds (it is determined that the recognition result is valid information), the output interface 16 outputs the barcode recognition result to the outside. If the barcode recognition fails (it is determined that the recognition result is not valid information), the output interface 16 outputs information indicating the failure of barcode recognition to the outside. Note that if the barcode recognition fails, an image conversion process for the input image and barcode recognition processing may be re-executed by feeding back the information obtained in the respective steps in the barcode recognition processing to the image analysis unit 12 as in the fifth process example, to be described later.

The second process example will be described next.

Assume that in the second process example, an image conversion method is decided on the basis of the density value of the background (medium) of the 12-bit image. Assume that in the second to fifth process examples to be described below, the image conversion unit 13 has a function of converting a 12-bit image into an 8-bit image on the basis of the conversion table designated by the image analysis unit 12.

The medium density estimating unit 23 of the image analysis unit 12 has a function of determining the density value (medium density value) of the background image of the 12-bit image captured by the camera 2. The density value of the background image which is determined by the medium density estimating unit 23 is information indicating a characteristic of the background image of the input image. For example, the density value of the background image may be the modal density value or average density value of the entire input image with 4,096 tone levels or the density value determined by the percentile scheme.

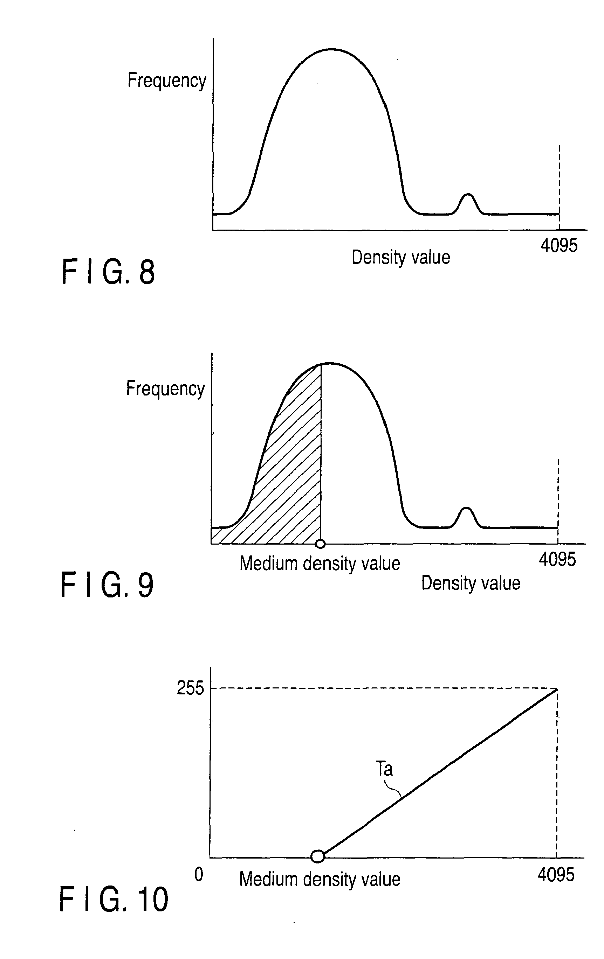

FIG. 8 is a view showing an example of a density histogram of all the pixels of an input image with 4,096 tone levels.

Assume that the density histogram of the image captured by the camera 2 from the barcode-printed surface of the medium includes the density distribution of the background image and the density distribution of the bar image, as shown in FIG. 8. As described above, this embodiment is based on the assumption that each bar constituting a barcode is captured as an image brighter than the background. For this reason, the density distribution of a background image includes smaller density values than the density distribution of a bar image. That is, in the case of the histogram shown in FIG. 8, it is determined that the distribution having a peak on the left side (where small density values are present) is the density distribution of the background image, and the distribution having a peak on the right side (where large density values are present) is the density distribution of the bar image. In an operation mode of printing a dark barcode on a bright background (e.g., an operation mode of printing a black barcode on a white background), it is assumed that the density distribution of a background image will appear on the bright side, and the density distribution of a bar image will appear on the dark side. For example, in density value setting like that shown in FIG. 8, it is assumed that the density distribution of a background image will appear on the right side, and the density distribution of a bar image will appear on the left side, unlike the case of the density histogram shown in FIG. 8.

Assume that in this case, as shown in FIG. 8, a distribution having a peak on the left side of a density histogram is the density distribution of a background image, and a distribution having a peak on the right side is the density distribution of a bar image.

In the case of the histogram shown in FIG. 8, information indicating a characteristic of a distribution having a peak on the left side (i.e., the density distribution of a background image) is determined as the density value of the background image (medium density value). For example, the medium density estimating unit 23 determines the peak value (modal density value) or average value of the distribution or the like as information indicating a characteristic of the density distribution of a background image. The above modal density value is determined by determining the maximum frequency value (peak value) in the distribution on the left side of the histogram. The above average value is determined by calculating the average value of the densities of the overall distribution of the background image determined from the peak value on the left side of the histogram.

The medium density estimating unit 23 may determine a density value at a position where the value obtained by integrating densities from the left side of the histogram exceeds a predetermined threshold as a medium density value to be determined by the percentile scheme. The following will exemplify a case in which a medium density value is determined by the percentile scheme as information indicating a characteristic of the density distribution of a background image.

FIG. 9 is a graph for explaining the medium density value determined by the percentile scheme.

When determining a medium density value by the above percentile scheme, the medium density estimating unit 23 integrates density values from the side where the density distribution of a background image appears (the density value "0" on the left end in the case shown in FIG. 8), as shown in FIG. 9. Every time the medium density estimating unit 23 calculates an integral value from the density value "0" to each density value, the unit determines whether the calculated integral value is equal to or more than a predetermined threshold. If the calculated integral value is equal to or more than the threshold, the medium density estimating unit 23 determines the density value corresponding to the integral value as a medium density value.

A threshold for determining a medium density value by the percentile scheme is a value which should be set in accordance with the density distribution of a background image or bar image to be assumed. For example, in the case shown in FIG. 9, a threshold is set to be smaller than the peak density value of a distribution determined as the density distribution of a background image. In addition, the above threshold is set from, for example, the ratio (percentage) of an integral value to an overall density histogram.

As described above, in the second process example, the medium density estimating unit 23 determines a medium density value as information indicating a characteristic of the density distribution of a background image. When the above medium density value is determined, the conversion method deciding unit 26 decides an image conversion method corresponding to the medium density value determined by the medium density estimating unit 23. In the second process example, the conversion method deciding unit 26 decides an image conversion method of converting each pixel with a density value less than the medium density value to the density value "0" and linearly converting each pixel with a density value equal to or more than the medium density value to the density value of 0 to 255. Such an image conversion method is designated as, for example, a conversion table with respect to the image conversion unit 13.

FIG. 10 is a graph for explaining an example of a conversion table Ta corresponding to a medium density value.

As shown in FIG. 10, in the second process example, the conversion method deciding unit 26 creates the conversion table Ta for linear conversion with the medium density value determined by the medium density estimating unit 23 being a base point. In the image conversion process based on the conversion table Ta shown in FIG. 10, as described above, each pixel with a density value less than the medium density value in the input image is converted into the density value "0", and each pixel with a density value equal to or more than the medium density value in the input image is linearly converted into the density value of 0 to 255.

The second process example described above can convert the information of a portion including the pixels constituting the bar image, which has density values larger than the medium density value, into information (density values of 0 to 255) in a wide range while discarding the information of a portion having density values smaller than the medium density value.

A sequence of a process as the above second process example will be described next.

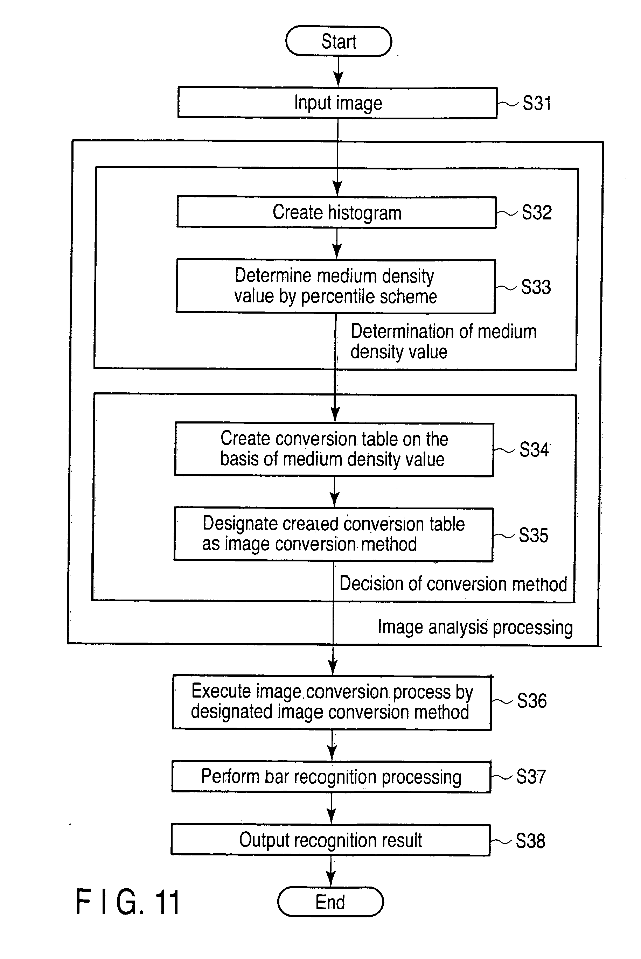

FIG. 11 is a flowchart for explaining a sequence of the second process example in the barcode recognition apparatus 1.

Upon acquiring the 12-bit image captured by the camera 2 (step S31), the image interface 11 supplies the acquired 12-bit image to the image analysis unit 12 and the image conversion unit 13. Upon receiving the 12-bit image from the image interface 11, the image analysis unit 12 causes the medium density estimating unit 23 to perform the processing of determining a medium density value in the 12-bit image (steps 32 and S33).

Assume that in this case, a medium density value is determined by the above percentile scheme. That is, the medium density estimating unit 23 creates a density histogram indicating the density distribution of all the pixels of the 12-bit image (step S32). Upon creating the histogram, the medium density estimating unit 23 determines a medium density value by using the histogram (step S33). In the processing of determining a medium density value, the medium density estimating unit 23 sequentially integrates density values from the density value "0" on the histogram to each density value. Every time the medium density estimating unit 23 calculates an integral value up to each density value, the unit 23 determines whether the calculated integral value is equal to or more than a predetermined threshold. If the calculated integral value is equal to or more than the predetermined threshold, the medium density estimating unit 23 determines the density value corresponding to the obtained integral value as the medium density value of the 12-bit image.

When the medium density estimating unit 23 determines the medium density value of the 12-bit image, the conversion method deciding unit 26 decides an image conversion method for the conversion of the 12-bit image into an 8-bit image for recognition processing on the basis of the medium density value (steps S34 and S35). That is, the conversion method deciding unit 26 creates the conversion table Ta for image conversion corresponding to the medium density value determined by the medium density estimating unit 23 (step S34). For example, the conversion table Ta is used to designate linear conversion which rises from the medium density value as a base point. Upon creating the conversion table Ta for image conversion, the conversion method deciding unit 26 designates the created conversion table Ta as an image conversion method with respect to the image conversion unit 13 (step S35).

When an image conversion method (conversion table) for the 12-bit image is designated by the conversion method deciding unit 26 of the image analysis unit 12, the image conversion unit 13 performs the processing of converting the 12-bit image into an 8-bit image in accordance with the designated conversion table Ta (step S36). The 8-bit image generated by an image conversion process based on the designated conversion table is supplied from the image conversion unit 13 to the bar recognition unit 14.

The bar recognition unit 14 performs barcode recognition processing for the 8-bit image supplied from the image conversion unit 13 (step S37). In the barcode recognition processing in the bar recognition unit 14, for example, as described above, bar candidate detection processing, bar identification processing, barcode decoding processing, and decoding result determination processing are performed. The bar recognition unit 14 outputs the processing result obtained by the barcode recognition processing to the outside via the output interface 16 (step S38).

If, for example, the barcode recognition succeeds (it is determined that the recognition result is valid information), the output interface 16 outputs the barcode recognition result to the outside. If the barcode recognition fails (it is determined that the recognition result is not valid information), the output interface 16 outputs information indicating the failure of barcode recognition to the outside. Note that if barcode recognition fails, it suffices to retry an image conversion process and barcode recognition processing for the input image by feeding back the information obtained in each step in the barcode recognition processing to the image analysis unit 12 as in the fifth process example.

The third process example will be described next.

In the third process example, an image conversion method is decided on the basis of the density value of each bar constituting the barcode of the 12-bit image.

The bar density estimating unit 24 of the image analysis unit 12 has a function of determining the density value (bar density value) of the bar image of the 12-bit image captured by the camera 2. The bar density value determined by the bar density estimating unit 24 is information indicating a characteristic of the bar image of the input image. For example, the above bar density value can be the modal density value (peak value) or average density value of the density distribution of the bar image or the density value determined by the percentile scheme.

This embodiment is based on the assumption that each bar constituting a barcode is captured as an image brighter than a background. For this reason, the density distribution of a bar image includes density values larger than those of the density distribution of a background image. That is, in the case of a density histogram like that shown in FIG. 8, it is assumed that a distribution having a peak on the right side (where large density values are present) is the density distribution of a bar image. Note, however, that in an operation mode of printing a dark barcode on a bright background (for example, an operation mode of printing a black barcode on a white background), the density distribution of a bar image appears on the dark side, and the density distribution of a background image appears on the bright side. With density value setting like that shown in FIG. 8, for example, the density distribution of a bar image appears on the left side, and the density distribution of a background image appears on the right side, unlike the case of the histogram shown in FIG. 8.

Assume that in this case, a distribution having a peak on the right side of a density histogram is the density distribution of a bar image, as shown in FIG. 8.

In the case of the histogram shown in FIG. 8, information indicating a characteristic of a distribution having a peak on the right side (i.e., the density distribution of a bar image) is determined as the density value of a bar image (bar density value). For example, the bar density estimating unit 24 determines the modal density value or average value of the distribution or the like as information indicating a characteristic of the density distribution of the bar image. The above modal density value is determined by determining the most frequent value (peak value) in the distribution on the right side of the histogram. The above average value is determined by calculating the average value of the densities of the overall distribution of the bar image which is estimated from the peal value on the right side of the histogram.

In addition, the bar density estimating unit 24 can determine, as a bar density value based on the percentile scheme, a density value at a position where the value obtained by integrating density values from the right end (density value "4,096") of the histogram to each density value exceeds a predetermined threshold. The following will exemplify a case in which a bar density value is determined by the percentile scheme as information indicating a characteristic of the density distribution of a bar image.

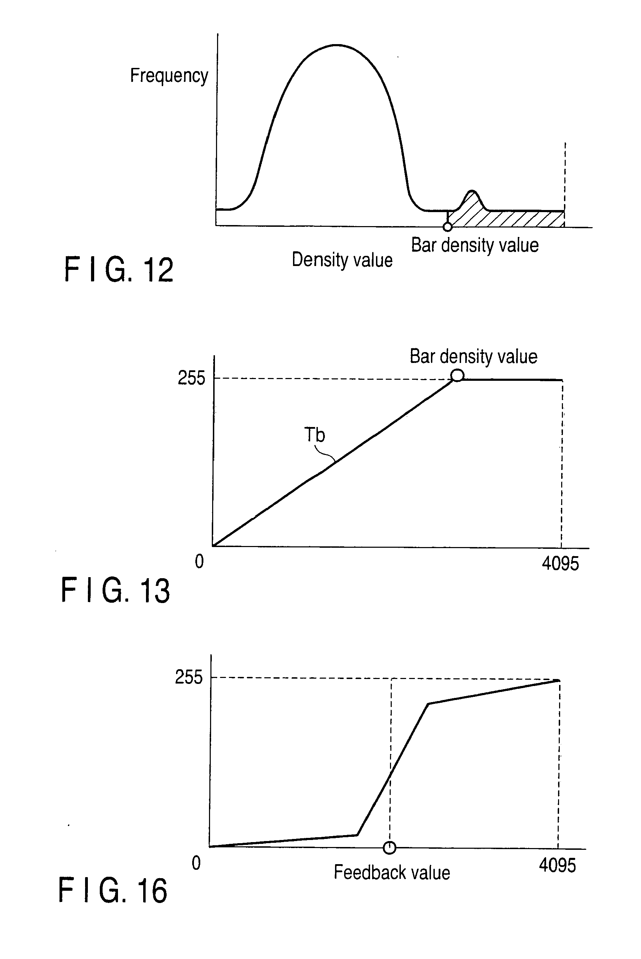

FIG. 12 is a graph for explaining the bar density value determined by the percentile scheme.

When determining a bar density value by the above percentile scheme, the bar density estimating unit 24 integrates density values from the side of the histogram on which the density distribution of a bar image appears (the density value "4,096" on the right end in the case shown in FIG. 8) up to each density value. Every time an integral value is calculated up to each density value, the bar density estimating unit 24 determines whether the calculated integral value is equal to or more than a predetermined threshold (a threshold for bar density value determination). If the calculated integral value becomes equal to or more than the threshold, the bar density estimating unit 24 determines the density value corresponding to the integral value as a bar density value.

A threshold for the determination of a bar density value by the percentile scheme is a value which should be set in accordance with the density distribution of a bar image or background image to be assumed. For example, in the case shown in FIG. 12, a threshold is set such that a bar density value becomes smaller than the peak value of the density distribution of a bar image or the minimum value of the density distribution of the bar image. In addition, the above threshold is set from, for example, the ratio (percentage) of an integral value to an overall density histogram.

As described above, in the third process example, the bar density estimating unit 24 determines a bar density value as information indicating a characteristic of the density distribution of a bar image. When the above bar density value is determined, the conversion method deciding unit 26 decides an image conversion method corresponding to the bar density value determined by the bar density estimating unit 24. In the third process example, the conversion method deciding unit 26 decides an image conversion method of converting each pixel having a density value equal to or more than a bar density value to the density value "255" and also linearly converting each pixel having a density value less than the bar density value to the density value of 0 to 255. Information of such an image conversion method is designated as, for example, a conversion table with respect to the image conversion unit 13.

FIG. 13 is a graph for explaining an example of a conversion table Tb corresponding to a bar density value.

As shown in FIG. 13, in the third process example, the conversion method deciding unit 26 creates the conversion table Tb for linear conversion with the bar density value determined by the bar density estimating unit 24 being a base point. In the image conversion process based on the conversion table Tb shown in FIG. 13, as described above, each pixel with a density value equal to or more than a bar density value in the input image is converted into the density value "255" and each pixel with a density value less than the bar density value in the input image is linearly converted into the density value of 0 to 255.

The third process example described above can convert the information of a portion including the pixels constituting the background image, which has density values smaller than the bar density value, into information (density values of 0 to 255) in a wide range while discarding the information of a portion with density values larger than the bar density value (converting all the density values to the maximum value).

A sequence of a process as the above third process example will be described next.

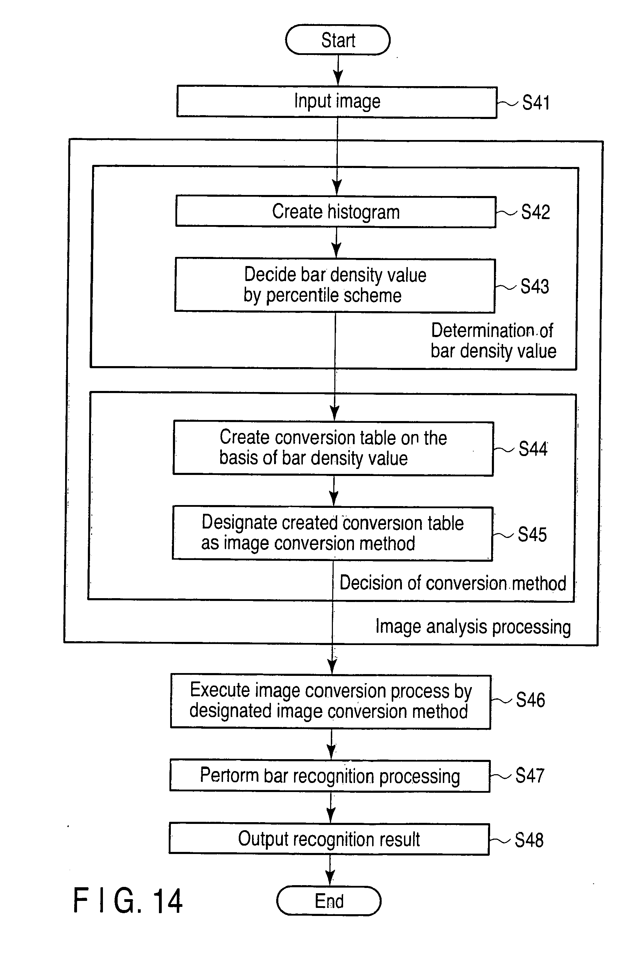

FIG. 14 is a flowchart for explaining a sequence of the third process example in the barcode recognition apparatus 1.

Upon acquiring the 12-bit image captured by the camera 2 (step S41), the image interface 11 supplies the acquired 12-bit image to the image analysis unit 12 and the image conversion unit 13. Upon receiving the 12-bit image from the image interface 11, the image analysis unit 12 causes the medium density estimating unit 23 to perform the processing of determining a bar density value in the 12-bit image (steps 42 and S43). Assume that in this case, a bar density value is determined by the above percentile scheme. That is, the bar density estimating unit 24 creates a histogram indicating the density distribution of all the pixels of the 12-bit image (step S42). Upon creating the histogram, the bar density estimating unit 24 determines a bar density value by using the histogram (step S43). That is, the bar density estimating unit 24 sequentially integrates density values from the maximum density value "4,095" of the histogram to each density value. Every time an integral value is calculated up to each density value, the bar density estimating unit 24 determines whether the calculated integral value is equal to or more than a predetermined threshold. If the calculated integral value becomes equal to or more than the threshold, the bar density estimating unit 24 determines the density value corresponding to the integral value as a bar density value in the 12-bit image.

When the bar density estimating unit 24 determines the bar density value of the 12-bit image, the conversion method deciding unit 26 decides an image conversion method for the conversion of the 12-bit image into an 8-bit image for recognition processing on the basis of the bar density value (steps S44 and S45). That is, the conversion method deciding unit 26 creates the conversion table Tb for image conversion corresponding to the bar density value determined by the bar density estimating unit 24 (step S44). For example, this conversion table is used to designate linear conversion from the minimum density value "0" to a bar density value. Upon creating the conversion table Tb for image conversion, the conversion method deciding unit 26 designates the created conversion table Tb as an image conversion method with respect to the image conversion unit 13 (step S45).

When an image conversion method (conversion table) for the 12-bit image is designated by the conversion method deciding unit 26 of the image analysis unit 12, the image conversion unit 13 performs the processing of converting the 12-bit image into an 8-bit image in accordance with the designated conversion table Tb (step S46). The 8-bit image generated by an image conversion process based on the designated conversion table is supplied from the image conversion unit 13 to the bar recognition unit 14.

The bar recognition unit 14 performs barcode recognition processing for the 8-bit image supplied from the image conversion unit 13 (step S47). In the barcode recognition processing in the bar recognition unit 14, for example, as described above, bar candidate detection processing, bar identification processing, barcode decoding processing, and decoding result determination processing are performed. The bar recognition unit 14 outputs the processing result obtained by the barcode recognition processing to the outside via the output interface 16 (step S48).

If, for example, the barcode recognition succeeds (it is determined that the recognition result is valid information), the output interface 16 outputs the barcode recognition result to the outside. If the barcode recognition fails (it is determined that the recognition result is not valid information), the output interface 16 outputs information indicating the failure of barcode recognition to the outside. Note that if barcode recognition fails, it suffices to retry an image conversion process and barcode recognition processing for the input image by feeding back the information obtained in each step in the barcode recognition processing to the image analysis unit 12 as in the fifth process example, to be described later.

The fourth process example will be described next.

In the fourth process example, an image conversion method is decided on the basis of a combination of the density value of a background (medium) of an input image and the density value of a bar. In other words, the fourth process example is configured to create a conversion table for designating an image conversion method by combining the medium density value obtained in the second process example and the bar density value obtained in the third process example.

That is, in the fourth process example, the medium density estimating unit 23 determines a medium density value like that described in the second process example, and the bar density estimating unit 24 determines a bar density value like that described in the third process example, for the 12-bit image captured by the camera 2.

Assume that a medium density value like that shown in FIG. 9 and a bar density value like that shown in FIG. 12 are determined from a density histogram like that shown in FIG. 8. In this case, as the conversion table Ta based on the medium density value, a table for the linear conversion of density values from the medium density value to the maximum density value is obtained, as shown in FIG. 10. As the conversion table Tb based on the bar density value, a table for the linear conversion of density values from the minimum density value to the bar density value is obtained, as shown in FIG. 13. In the fourth process example, therefore, it is conceivable to obtain a conversion table Tab considering a medium density value and a bar density value by combining the conversion table Ta and the conversion table Tb.

That is, the conversion method deciding unit 26 decides the conversion table Tab on the basis of the medium density value determined by the medium density estimating unit 23 and the bar density value determined by the bar density estimating unit 24.

Various techniques are conceivable as techniques for choosing a conversion table Tab based on the combination of the medium density value and the bar density value. As the conversion table Tab, it suffices to use a table which enhances density changes from a medium density value to a bar density value. For example, it suffices to create the conversion table Tab by averaging the sum of the conversion table Ta based on the medium density value and the conversion table Tb based on the bar density value, or use a conversion table which linearly converts density values from a medium density value to a bar density value. In the former case, it is possible to execute an image conversion process reflecting changes in density values less than a medium density value and changes in density values equal to or more than a bar density value while enhancing density changes from the medium density value to the bar density value. In the latter case, it is possible to execute image conversion which enhances density changes from a medium density value to a bar density value to the maximum (e.g., conversion to "0" to "255" of 256 tone levels). It also suffices to decide the conversion table Tab by combining the former and the latter.

A sequence of a process as the fourth process example will be described next.

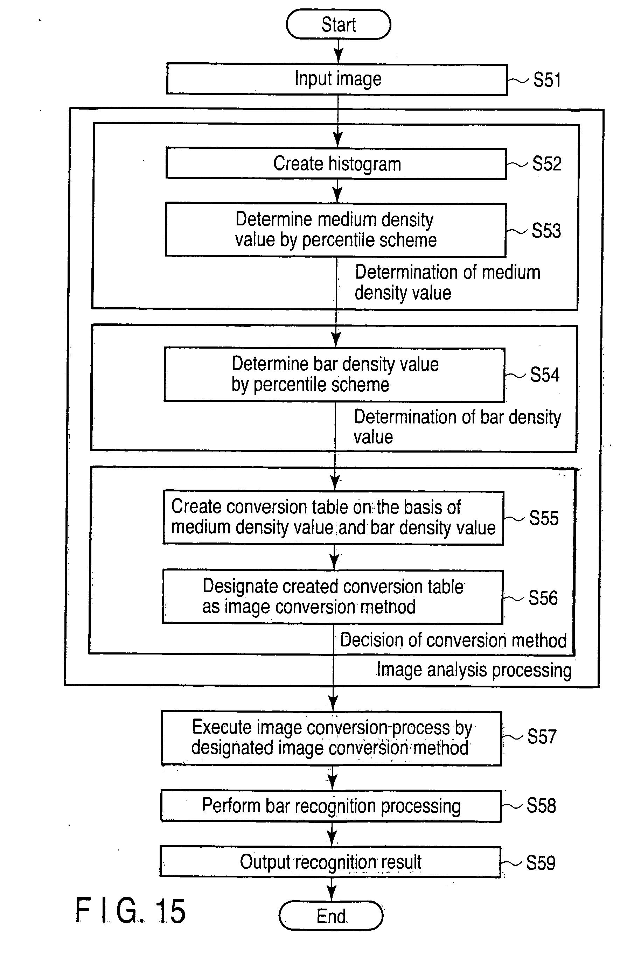

FIG. 15 is a flowchart for explaining a sequence of the fourth process example in the barcode recognition apparatus 1.

Upon acquiring the 12-bit image captured by the camera 2 (step S51), the image interface 11 supplies the acquired 12-bit image to the image analysis unit 12 and the image conversion unit 13. Upon receiving the 12-bit image from the image interface 11, the image analysis unit 12 determines a medium density value in the 12-bit image by using the medium density estimating unit 23 (steps 52 and S53), and also determines a bar density value in the 12-bit image by using the bar density estimating unit 24 (step S54).

When the medium density value and bar density value of the 12-bit image are determined, the conversion method deciding unit 26 decides an image conversion method for the conversion of the 12-bit image into an 8-bit image for recognition processing on the basis of the medium density value and the bar density value (steps S55 and S56). That is, the conversion method deciding unit 26 creates the conversion table Tab for image conversion corresponding to the medium density value and the bar density value (step S55). For example, the conversion table Tab is used to designate linear conversion which enhances density changes from the medium density value to the bar density value, as described above. Upon creating the conversion table Tab for image conversion, the conversion method deciding unit 26 designates the created conversion table Tab as an image conversion method with respect to the image conversion unit 13 (step S56).

When an image conversion method (conversion table) for the 12-bit image is designated by the conversion method deciding unit 26 of the image analysis unit 12, the image conversion unit 13 performs the processing of converting the 12-bit image into an 8-bit image in accordance with the designated conversion table Tab (step S57). The 8-bit image generated by the image conversion process based on the designated conversion table is supplied from the image conversion unit 13 to the bar recognition unit 14.

The bar recognition unit 14 performs barcode recognition processing for the 8-bit image supplied from the image conversion unit 13 (step S58). In the barcode recognition processing in the bar recognition unit 14, for example, as described above, bar candidate detection processing, bar identification processing, barcode decoding processing, and decoding result determination processing are performed. The bar recognition unit 14 outputs the processing result obtained by the barcode recognition processing to the outside via the output interface 16 (step S59).

If, for example, the barcode recognition succeeds (it is determined that the recognition result is valid information), the output interface 16 outputs the barcode recognition result to the outside. If the barcode recognition fails (it is determined that the recognition result is not valid information), the output interface 16 outputs information indicating the failure of barcode recognition to the outside. Note that if barcode recognition fails, it suffices to retry an image conversion process and barcode recognition processing for the input image by feeding back the information obtained in each step in the barcode recognition processing to the image analysis unit 12 as in the fifth process example, to be described later.

The fifth process example will be described next.

The fifth process example is configured to retry an image conversion process and barcode recognition processing on the basis of the information fed back from the feedback unit 15 to the image analysis unit 12. In the fifth process example, the image analysis unit 12 has a function of deciding an image conversion method on the basis of the fed back information, the image conversion unit 13 has a function of re-performing re-conversion to reconvert an input image into an image for recognition processing, and the bar recognition unit 14 has a retry function of re-executing barcode recognition processing on the basis of the image for recognition processing which is obtained by the re-conversion function.

That is, in the fifth process example, if it is determined that the barcode recognition result obtained by the bar recognition unit 14 is not valid or seems to be erroneous, the feedback unit 15 feeds back, to the image analysis unit 12, the information obtained in the process of bar recognition processing or information generated from the information obtained in the process of bar recognition processing as feedback information. The image analysis unit 12 re-decides an image conversion method on the basis of the fed back information. In this case, the image conversion unit 13 re-executes the processing of converting the input image into an image for recognition processing in accordance with the image conversion method based on the feedback information designated by the image analysis unit 12. The bar recognition unit 14 re-performs barcode recognition processing for the image for recognition processing obtained by this re-conversion.

The above feedback information will be described next.

As described above, the above feedback information is information used for the decision of an image conversion method for re-conversion of an input image into an image for recognition processing. The above feedback information therefore needs to be information for the determination of an image conversion method which allows accurate recognition of a barcode. Assume that in this case, the above feedback information is information obtained in the process of bar recognition processing or information determined from the information obtained in the process of bar recognition processing. If feedback information is to be determined from the information obtained in the process of bar recognition processing, the bar recognition unit 14, the feedback unit 15, or the image analysis unit 12 may execute determination processing for feedback information.

The first example of feedback information will be described next.

The first example of feedback information will be described by referring to the processing of determining an optimal density value (separation threshold) for separating a background image from a bar image (feedback information determination processing). The above separation threshold is information determined from the information obtained in the process of bar recognition processing. Assume that in this case, the feedback unit 15 determines a separation threshold from the information obtained in the process of bar recognition processing.

The bar recognition unit 14 performs the above bar candidate detection processing as one step in barcode recognition processing. In bar candidate detection processing, if the density value of a background image is close to the density value of a bar image in an image for recognition processing, it is difficult to reliably detect all bars as bar candidates. In other words, the bar candidate detection accuracy can be increased by converting an input image into an image for recognition processing so as to enhance the density difference between the density value of the background image and the density value of the bar image. A separation threshold as the feedback information is information for deciding an image conversion method which enhances the density difference between a background image and a bar image.

In bar candidate detection processing, the bar recognition unit 14 can often detect some bars even if it cannot detect all the bars. In such a case, the bar recognition unit 14 supplies information indicating a detected bar candidate area to the feedback unit 15. The feedback unit 15 determines a separation threshold on the basis of an image of the detected bar candidate area in the input image.

For example, the feedback unit 15 determines a bar density value and the density value of a background image from the image of the bar candidate area, and determines their median value as a separation threshold. In this case, the feedback unit 15 extracts the image of the bar candidate area from the input image, and determines, as the density value of the image of the bar candidate, a density value such as a modal density value or average density value obtained from the extracted image of the bar candidate area. As the density value of the background image, the modal density value or average value obtained from the entire input image or a density value determined by the percentile scheme can be used, as described in the first to fourth process examples.

Note that if the shape of each bar and the manner of arrangement of bars (e.g., the intervals of the bars) are predetermined forms, a background image area can be estimated from the image area of a detected bar candidate. In this case, the feedback unit 15 estimates a background image area from the image area of the bar candidate, extracts the image of the background image area estimated from the input image, and determines, as the density value of the background image, a density value such as the modal density value or average density value obtained from the extracted background image.

As described above, if at least one bar candidate is detected, the density value of a bar or the density value of a background image in the input image can be estimated on the basis of information indicating the bar candidate area. If at least one bar is detected as a bar candidate, it can be thought that the bar density value obtained from the bar candidate area is higher in accuracy than the bar density value determined from the density histogram of the entire image.

The separation threshold determined on the basis of the information indicating the bar candidate area like that described above is fed back to the image analysis unit 12. Upon receiving the separation threshold as feedback information, the image analysis unit 12 creates a conversion table with reference to the fed back separation threshold. A conversion table with reference to a separation threshold is a table which designates an image conversion method by which an image for recognition processing is obtained, with the density difference between a background image and a bar image being enhanced. That is, the image analysis unit 12 creates a conversion table which converts density values near a separation threshold in an input image into density values in a wide range.

In an image conversion process based on such a conversion table, an image for recognition processing (e.g., an 8-bit image) can be obtained, with enhanced changes in density near a separation threshold in an input image (e.g., a 12-bit image). That is, a separation threshold is a density value which separates a background image from a bar image. For this reason, it can be thought that an image conversion process based on the above conversion table obtains an image for recognition processing with the density difference between a background image and a bar image being enhanced.

FIG. 16 is a graph for explaining an example of a conversion table with reference to a separation threshold.

In the case shown in FIG. 16, density values in a predetermined range before and after a separation threshold are converted into density values in a wide range, and the remaining density values are converted into density values in a narrow range. For example, with a conversion table like that shown in FIG. 16, when an input image with 4,096 tone levels is to be converted into an image with 256 tone levels for recognition processing, it is possible to designate image conversion which converts pixels with density values in the range of "separation threshold - 100" to "separation threshold + 100" into pixels with the density values of 27 to 227, converts pixels with density values equal to or less than "separation threshold - 100" into pixels with the density values of 0 to 27, and converts pixels with density values equal to or more than "separation threshold + 100" into pixels with the density values of 227 to 255. In this case, it is possible to obtain an image for recognition processing with density changes 100 before and after the separation threshold in the input image being enhanced.

The second example of feedback information will be described next.

The second example of feedback information will be described by referring to the processing of determining a density histogram in a barcode area candidate. The above barcode area candidate is information obtained in the process of bar recognition processing. Background noise in an image of a barcode area candidate in an input image is expected to be smaller than that in the entire input image. Background noise is, for example, a background image or an image irrelevant to a barcode. As such noise, for example, an advertisement printed on a barcode-printed surface is assumed. That is, a density histogram aimed at an image of a barcode area candidate in an input image is more likely to reduce the influence of background noise than a density histogram aimed at the entire input image.

In one step in barcode recognition processing, the bar recognition unit 14 performs the processing of detecting a barcode area candidate from a detected bar candidate. For example, even if the bar recognition unit 14 cannot detect all bars, the unit can often detect a barcode area or part of a barcode area as long as it can detect some bars. In such a case, the bar recognition unit 14 supplies information indicating a detected barcode area to the image analysis unit 12 via the feedback unit 15. This allows the image analysis unit 12 to create a density histogram aimed solely at an image around a barcode and decide an image conversion method corresponding to the density histogram.

As described in the first to fourth process examples, the image analysis unit 12 has a function of creating a density histogram and determining a modal density value, a medium density value, a bar density value, or the like from the created density histogram. If information indicating a barcode area is obtained from the bar recognition unit 14, the image analysis unit 12 can perform processing like that described in the first to fourth process examples for the image of the barcode area in the input image. That is, the image analysis unit 12 can decide an image conversion method on the basis of a modal density value, medium density value, or bar density value obtained from the barcode area or a combination of the medium density value and the bar density value.

A sequence of processing as the fifth process example will be described next.

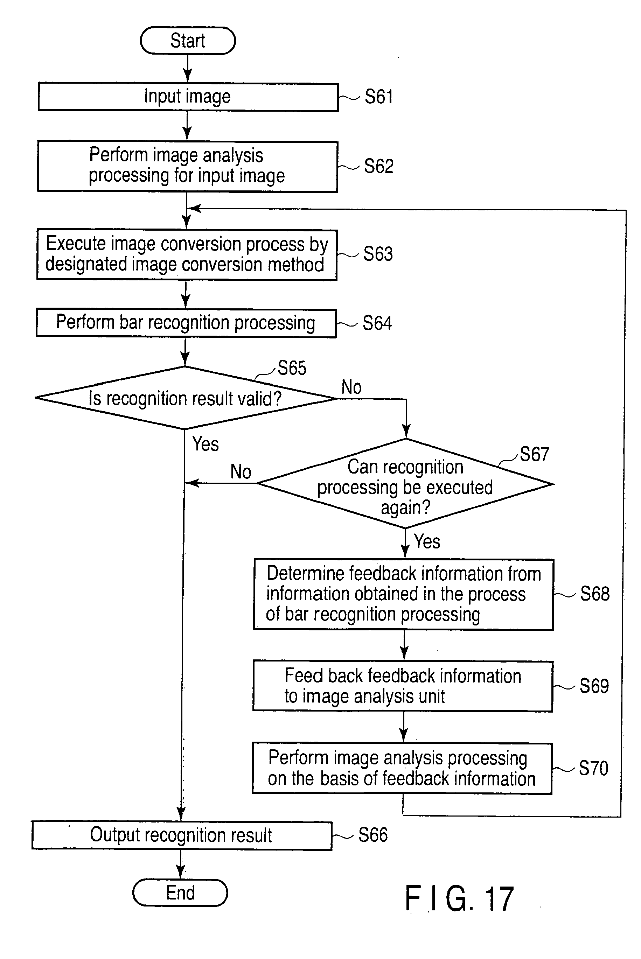

FIG. 17 is a flowchart for explaining a sequence of the fifth process example in the barcode recognition apparatus 1.

Upon acquiring an input image (e.g., a 12-bit image with 4,096 tone levels) captured by the camera 2 (step S61), the image interface 11 supplies the acquired input image to the image analysis unit 12 and the image conversion unit 13. Upon receiving the input image from the image interface 11, the image analysis unit 12 performs the image analysis processing of determining a characteristic obtained from the input image (step S62). In the image analysis processing in step S62, the image analysis unit 12 determines the modal density value of the entire input image, a medium density value, or a bar density value as information for deciding an image conversion method, and decides an image conversion method such as a conversion table on the basis of the determined information. As the processing in step S62, for example, the processing described in one of the second to fourth process examples (steps S11 to S21, steps S32 to S35, steps S42 to S45, and steps S52 to S56) can be used. A detailed description of the processing in step S62 will be omitted.

When the image analysis unit 12 designates an image conversion method, the image conversion unit 13 performs the processing of converting an input image into an image for recognition processing (e.g., an 8-bit with 256 tone levels) in accordance with the image conversion method designated by the image analysis unit 12 (step S63). The image for recognition processing obtained as a result of this image conversion process is supplied from the image conversion unit 13 to the bar recognition unit 14. The bar recognition unit 14 executes barcode recognition processing for the image for recognition processing supplied from the image conversion unit 13 (step S64).

Note that the image conversion process in step S63 executed following steps S61 and S62 corresponds to the image conversion process based on the first image conversion method, and the image conversion unit 13 which executes this processing corresponds to the first image conversion unit. The barcode recognition processing in step S64 executed following steps S61 to S63 corresponds to the first barcode recognition processing, and the bar recognition unit 14 which executes this processing corresponds to the first bar recognition unit.

In the barcode recognition processing in the bar recognition unit 14, for example, as described above, barcode candidate detection processing, bar identification processing, barcode decoding processing, and decoding result determination processing are performed. Assuming that processing up to the acquisition of a barcode decoding processing result is barcode recognition processing, the bar recognition unit 14 performs the recognition result (decoding result) determination processing of determining whether the recognition result (decoding result) obtained by barcode recognition processing is valid information (step S65).

In this recognition result determination processing, the bar recognition unit 14 determines whether the recognition result obtained by the barcode recognition processing is desired information. For example, the bar recognition unit 14 determines the validity of the recognition result by determining whether the barcode recognition result is information constituted by a predetermined number of digits. It also suffices to determine the validity of the recognition result by determining whether the barcode recognition result matches information registered in a dictionary database (not shown). Upon determining that the recognition result obtained by the barcode recognition processing is valid (YES in step S65), the bar recognition unit 14 outputs the processing result obtained by the barcode recognition processing to the outside via the output interface 16 (step S66).

Upon determining that the recognition result obtained by the barcode recognition processing is not valid (NO in step S65), the bar recognition unit 14 further determines whether it can retry barcode recognition processing for the image (step S67). For example, the number of retries of barcode recognition processing may be limited or the entire processing time for the input image may be limited. Upon determining that the retry cannot be done (NO in step S67), the bar recognition unit 14 outputs information indicating the failure of the barcode recognition to the outside via the output interface 16.

Upon determining that the retry can be done (YES in step S67), the bar recognition unit 14 determines that it re-executes barcode recognition processing for the image. Upon determining that barcode recognition processing is to be re-executed, the bar recognition unit 14 or the feedback unit 15 performs the processing of feeding back the information obtained in the process of bar recognition processing for the image or information determined from the image, as feedback information, to the image analysis unit 12 (steps S68 and S69). Assume that the feedback unit 15 determines the feedback information from the information obtained in the process of bar recognition processing. In this case, the feedback unit 15 acquires the information obtained in the process of bar recognition processing and determines the feedback information (step S68). If, for example, a separation threshold for a background and a bar is feedback information, the feedback unit 15 acquires information indicating a bar candidate area from the bar recognition unit 14, and determines a separation threshold on the basis of the information indicating the acquired bar candidate area, as described above.

Upon determining the feedback information, the feedback unit 15 feeds back the feedback information to the image analysis unit 12. When the feedback information is fed back, the image analysis unit 12 executes image analysis processing for the input image on the basis of the feedback information (step S70). In this image analysis processing, an image conversion method for the input image is decided on the basis of the feedback information. The image conversion method decided on the basis of such feedback information is designated with respect to the image conversion unit 13. When the image conversion method based on the feedback information is designated with respect to the image conversion unit 13, the image conversion unit 13 and the bar recognition unit 14 re-execute the processing from step S63 described above.

Note that the image conversion process in step S63 executed following steps S68 to S70 corresponds to the image conversion process based on the second image conversion method, and the image conversion unit 13 which executes this processing corresponds to the second image conversion unit. In addition, the barcode recognition processing in step S64 executed following steps S68 to S70 and S63 corresponds to the second barcode recognition processing, and the bar recognition unit 14 which executes this processing corresponds to the second bar recognition unit.

In the fifth process example described above, even if no valid barcode recognition result could be obtained by predetermined barcode recognition processing, it is possible to analyze the input image on the basis of the information obtained in the process of barcode recognition processing and decide an optimal image conversion method for the conversion of the input image into an image for recognition processing. That is, in the fifth process example, even if no valid recognition result could be obtained by first-step barcode recognition processing, it is possible to execute second-step barcode recognition processing which can obtain a barcode recognition result with high accuracy.

In addition, in the fifth process example, accurate barcode recognition processing is executed by second-step barcode recognition processing for an input image which could not be recognized in the first-step barcode recognition processing. In the fifth process example, therefore, first-step barcode recognition processing is not limited to the above processing sequence, and recognition processing can be performed in various processing sequences. For example, in the fifth process example, step S62 described above may be omitted, and first-step barcode recognition processing may be performed by using an image converted by a predetermined image conversion method. In this case as well, in second-step barcode recognition processing, an input image can be converted into an image for recognition processing by an image conversion method optimized by using information obtained in first-step barcode recognition processing for the input image in which barcode recognition has failed in the first-step barcode recognition processing, and barcode recognition processing can be executed for the image obtained by the conversion.

According to each process example described above, there can be provided a barcode recognition apparatus and barcode recognition method which can efficiently execute barcode recognition processing with high accuracy.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A recognition apparatus (1) **characterized by** comprising:
an image acquisition unit (11) which acquires an input image including a detection target image;
an image analysis unit (12) which analyzes the input image acquired by the image acquisition unit and decides an image conversion method for conversion from the input image into an image in a form for recognition processing on the basis of the analysis result;
an image conversion unit (13) which converts the input image acquired by the image acquisition unit into an image for recognition processing by the image conversion method decided by the image analysis unit; and
a detection target recognition unit (14) which performs detection target recognition processing for the image for recognition processing obtained by the image conversion unit.

2. The apparatus according to claim 1,
**characterized in that**
the image conversion unit (13) has a function of converting an input image into an image for recognition processing by a plurality of types of image conversion methods, and
the image analysis unit (12) selects at least one image conversion method from the plurality of types of image conversion methods, which the image conversion unit has, on the basis of the analysis result on the input image acquired by the image acquisition unit.

3. The apparatus according to claim 1, **characterized in that** the image analysis unit (12) determines a density value of a background image included in the input image acquired by the image acquisition unit and decides an image conversion method for the input image on the basis of the determined density value of the background image.

4. The apparatus according to claim 1, **characterized in that** the image analysis unit (12) determines a density value of a detection element image forming a detection target included in the input image acquired by the image acquisition unit and decides an image conversion method for the input image on the basis of the determined density value of the detection element image.

5. The apparatus according to claim 1, **characterized in that** the image analysis unit (12) determines a density value of a background image included in the input image acquired by the image acquisition unit and a density value of a detection element image forming a detection target, and decides an image conversion method for the input image on the basis of the determined density value of the background image and the determined density value of the detection element image.

6. A recognition apparatus (1) **characterized by** comprising:
an image acquisition unit (11) which acquires an input image including a detection target image;
a first image conversion unit (13, S63) which converts the input image acquired by the image acquisition unit into an image in a form for recognition processing;
a first detection target recognition unit (14, S64) which performs detection target recognition processing for the image for recognition processing obtained by the first image conversion unit;
an image analysis unit (12, S68-S70) which analyzes the input image on the basis of information obtained in the process of detection target recognition processing in the first detection target recognition unit, when detection target recognition by the first detection target recognition unit has failed, and decides an image conversion method for re-conversion of the input image into an image for recognition processing on the basis of the analysis result;
a second image conversion unit (13, S63) which reconverts the input image into an image for recognition processing on the basis of the analysis result obtained by the image analysis unit; and
a second detection target recognition unit (14, S64) which performs detection target recognition processing for the image for recognition processing obtained by the second image conversion unit.

7. A recognition method used in a recognition apparatus (1), **characterized by** comprising:
acquiring (S10, S31, S41, S51) an input image including a detection target image;
performing (S11-S20, S32-S33, S42-S43, S52-S53) image analysis on the acquired input image;
deciding (S21, S34-S35, S44-S45, S54-S55) an image conversion method for conversion of the input image into an image in a form for recognition processing on the basis of the analysis result on the input image;
converting (S22, S36, S46, S56) the input image into an image for recognition processing by the decided image conversion method; and
performing (S23, S37, S47, S57) detection target recognition processing for the image for recognition processing obtained by the conversion.

8. The method according to claim 7, **characterized in that**
as the image conversion, a plurality of types of image conversion methods for conversion (S11-S20) of an input image into an image for recognition processing are configured to be executed, and
in deciding (S21) the image conversion method, at least one image conversion method is selected from the plurality of types of image conversion methods, which are configured to be executed as the image conversion, on the basis of the analysis result on the input image.

9. The method according to claim 7, **characterized in that**
in the image analysis (S32-S33), a density value of a background image included in the input image is determined, and
in deciding (S34-S35) the image conversion method, an image conversion method for the input image is decided on the basis of the density value of the background image which is determined by the image analysis.

10. The method according to claim 7,
**characterized in that**
in the image analysis (S42-S43), a density value of a detection element image forming a detection target included in the input image is determined, and
in deciding (S44-S45) the image conversion method, an image conversion method for the input image is decided on the basis of the density value of the detection element image which is determined by the image analysis.

11. The method according to claim 7,
**characterized in that**
in the image analysis (S52-S53), a density value of a background image included in the input image and a density value of a detection element image forming a detection target are determined, and
in deciding (S54-S55) the image conversion method, an image conversion method for the input image is decided on the basis of the density value of the background image and the density value of the detection element image which are determined by the image analysis.

12. A recognition method used in a recognition apparatus (1), **characterized by** comprising:
acquiring (S61) an input image including a detection target image;
converting (S63) the input image into an image in a form for recognition processing by a first image conversion method;
performing (S64) detection target recognition processing for the image for recognition processing obtained by the first image conversion method;
analyzing (S68) the input image on the basis of information obtained in the process of the detection target recognition processing when recognition of the detection target has failed;
deciding (S69-S70) a second image conversion method for re-conversion from the input image into an image for recognition processing on the basis of the analysis result on the input image;
reconverting (S63) the input image into an image for recognition processing by the second image conversion method; and
re-executing (S64) detection target recognition processing for the image for recognition processing obtained by the re-conversion.
